(19) Europäisches Patentamt
European Patent Office
Office européen des brevets

(11) **EP 3 291 477 A1**

(12) **EUROPEAN PATENT APPLICATION**

(43) Date of publication:
**07.03.2018 Bulletin 2018/10**

(51) Int Cl.:
***H04L 5/16*** *(2006.01)*     ***H04L 5/14*** *(2006.01)*

(21) Application number: **16306099.9**

(22) Date of filing: **31.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ALCATEL LUCENT**
**92100 Boulogne-Billancourt (FR)**

(72) Inventor: **MAES, Jochen**
**2018 Antwerpen (BE)**

(74) Representative: **D'Halleweyn, Nele Veerle Trees Gertrudis et al**
**Arnold & Siedsma**
**Bezuidenhoutseweg 57**
**2594 AC The Hague (NL)**

(54) **FULL-DUPLEX IN A COMMUNICATION SYSTEM USING TIME-DIVISION DUPLEXING TRANSCEIVER UNITS**

(57)    An access multiplexer for transmitting and receiving communication signals in a communication system, the access multiplexer comprising: a first transceiver unit configured for, when operably connected to a transmission line of the communication system, operating in a time-division duplexing mode by, during a first time frame, operating in a sending mode and by, during a second time frame after the first time frame, operating in a receiving mode; and a second transceiver unit configured for, when operably connected to the transmission line of the communication system, operating in a time-division duplexing mode by, during the first time frame, operating in a receiving mode and by, during the second time frame, operating in a sending mode.

FIG. 1

EP 3 291 477 A1

## Description

Field of Invention

The present invention relates to communication systems. Particular embodiments relate to an access multiplexer for transmitting and receiving communication signals in a communication system, and to a method for transmitting and receiving communication signals in a communication system.

Background

Currently available transceiver units for state-of-the-art communication systems, such as G.fast, operate in a time-division duplexing mode only, which means that they alternate between operating in a sending mode and operating in a receiving mode. Consequently, it is not possible to provide full-duplex operation, wherein each side of the communication system can simultaneously transmit a respective communication signal to the other side.

Summary

Embodiments of the present invention aim to provide full-duplex or full-duplex-like operation for access multiplexers that lack native full-duplex support.

For ease of discussion in this specification, "full-duplex", when attributed to embodiments of the present invention, may be considered to include "full-duplex-like".

According to a first aspect of the present invention there is provided an access multiplexer for transmitting and receiving communication signals in a communication system. The access multiplexer comprises a first transceiver unit and a second transceiver unit. The first transceiver unit is configured for, when operably connected to a transmission line of the communication system, operating in a time-division duplexing mode by, during a first time frame, operating in a sending mode and by, during a second time frame after the first time frame, operating in a receiving mode. The second transceiver unit is configured for, when operably connected to the transmission line of the communication system, operating in a time-division duplexing mode by, during the first time frame, operating in a receiving mode and by, during the second time frame, operating in a sending mode.

Embodiments of the present invention are based *inter alia* on the insight that the combination of multiple time-division duplexing, TDD, transceiver units (i.e. a transceiver unit configured for operating in a time-division duplexing mode) as building blocks allows to enable full-duplex operation. In other words, full-duplex operation is made possible, even using existing TDD transceiver units. In particular, the multiple TDD transceiver units are synchronized at least in the sense that during the first time frame, the first transceiver unit operates in the sending mode and the second transceiver unit operates in the receiving mode, while during the second time frame, which is after (i.e. directly or indirectly subsequent to (a guard interval after)) the first time frame, the first transceiver unit operates in the receiving mode and the second transceiver unit operates in the sending mode. In other words, at any point in time (excluding guard intervals and such), at least one of the multiple TDD transceiver units will be in sending mode while another of the multiple TDD transceiver units will be in receiving mode—thus enabling full-duplex operation. It will be understood by the skilled person that "full-duplex-like operation" may refer i.a. to the notion that, during some time periods, there is no or only limited communication taking place, for example because of guard intervals and such.

According to various embodiments, the access multiplexer comprises a vector processor configured for applying a P-coder matrix comprising at least one echo cancellation coefficient adapted for at least one of cancelling echo from the first transceiver unit during the first time frame and cancelling echo from the second transceiver unit during the second time frame. The P-coder matrix is applied to at least one communication signal of the communication signals.

In this way, echo can be cancelled or at least mitigated

According to various further developed embodiment, the vector processor is configured for applying the P-coder matrix to a first vector comprising: a transmit signal value of the first transceiver unit at a first advanced time value of the first time frame; a receive signal value of the second transceiver unit at a first delayed time value of the first time frame; and a transmit signal value of the first transceiver unit at the first delayed time value of the first time frame.

In this way, echo from the first transceiver unit to the second transceiver unit can be cancelled or at least mitigated, taking into account transmission and/or propagation delays.

In the present context, a "P-coder matrix" may refer to a pre-coder matrix (used for pre-emptively cancelling or mitigating undesired alien influence on a signal to be sent) and/or to a post-coder matrix (used for cancelling or mitigating undesired parts of a received signal).

According to various further developed embodiments, the vector processor is configured for applying the P-coder matrix to a second vector comprising: a receive signal value of the first transceiver unit at a second delayed time value of the second time frame; a transmit signal value of the second transceiver unit at a second advanced time value of the second time frame; and a transmit signal value of the second transceiver unit at the second delayed time value of the second time frame.

In this way, echo from the second transceiver unit to the first transceiver unit can be cancelled or at least mitigated, taking into account transmission and/or propagation delays.

According to various embodiments, the access multiplexer comprises a memory storage, configured for storing the transmit signal value of the first transceiver unit at the first delayed time value and/or the transmit signal value of the second transceiver unit at the second delayed time value.

In this way, the signal value to be used for echo cancellation purposes can be retrieved readily.

According to various embodiments, the time values are advanced or delayed respectively by 2 discrete multi-tone symbol positions. In a preferred embodiment, they are advanced or delayed respectively from an original time value indicating the time when the P-coder matrix is applied.

In this way, processing operations (such as (inverse) fast Fourier transform, (I)FFT, processing) and actual transceiving of the communication signal can be taken into account.

According to various embodiments, the access multiplexer comprises a buffer configured for storing at least one out-of-order sequential data item of the communication signals received by one of the first transceiver unit and second transceiver unit, in order to allow in-order delivery of sequential data items of the received communication signals.

In this way, in-order delivery of sequential data items can be obtained, even where multiple transceiver units are transmitting respective parts of a same communication signal, potentially leading to out-of-order reception of those parts.

According to various embodiments, the vector processor is configured for multiplexing at least one communication signal sent by the first transceiver unit and at least one communication signal sent the second transceiver unit for joint further transmission via the transmission line; and for demultiplexing a joint received communication signal into at least one communication signal to be received by the first transceiver unit and at least one communication signal to be received by the second transceiver unit.

According to some alternative embodiments, the access multiplexer comprises an analogue hardware multiplexer-demultiplexer arranged between a digital-analogue-converter and a analogue-digital-converter of the access multiplexer and the transmission line of the communication system.

According to other alternative embodiments, the access multiplexer comprises an analogue hardware multiplexer-demultiplexer additionally configured as a digital-analogue-converter and/or analogue-digital-converter.

In this way, the signals from both the first and the second transceiver unit can be transmitted on a single twisted-pair.

According to another aspect of the present invention, there is provided a method for transmitting and receiving communication signals in a communication system. The method comprises: operably connecting a first transceiver unit to a transmission line of the communication system, the first transceiver unit being configured for operating in a time-division duplexing mode; and operably connecting a second transceiver unit to the transmission line of the communication system, the second transceiver unit being configured for operating in a time-division duplexing mode. The method further comprises: during a first time frame, operating the first transceiver in a sending mode and operating the second transceiver unit in a receiving mode; and during a second time frame after the first time frame, operating the first transceiver unit in a receiving mode and operating the second transceiver unit in a sending mode.

It will be understood by the skilled person that the features and advantages disclosed hereinabove with respect to various embodiments of the access multiplexer may also apply, *mutatis mutandis*, to various embodiments of the method.

According to various embodiments, the method comprises applying a P-coder matrix comprising at least one echo cancellation coefficient adapted for at least one of cancelling echo from the first transceiver unit during the first time frame and cancelling echo from the second transceiver unit during the second time frame, the P-coder matrix being applied to at least one communication signal of the communication signals.

According to various further developed embodiment, the applying comprises applying the P-coder matrix to a first vector comprising: a transmit signal value of the first transceiver unit at a first advanced time value of the first time frame; a receive signal value of the second transceiver unit at a first delayed time value of the first time frame; and a transmit signal value of the first transceiver unit at the first delayed time value of the first time frame.

According to various further developed embodiments, the applying comprises applying the P-coder matrix to a second vector comprising: a receive signal value of the first transceiver unit at a second delayed time value of the second time frame; a transmit signal value of the second transceiver unit at a second advanced time value of the second time frame; and a transmit signal value of the second transceiver unit at the second delayed time value of the second time frame.

According to various embodiments, the method comprises storing the transmit signal value of the first transceiver unit at the first delayed time value and/or the transmit signal value of the second transceiver unit at the second delayed time value.

According to various embodiments, the time values are advanced or delayed respectively by 2 discrete multi-tone symbol positions. In a preferred embodiment, they are advanced or delayed respectively from an original time value indicating the time when the P-coder matrix is applied.

According to various embodiments, the method comprises storing at least one out-of-order sequential data item of the communication signals received by one of the first transceiver unit and second transceiver unit, in order to allow in-order delivery of sequential data items of the received communication signals.

According to various embodiments, the method comprises multiplexing at least one communication signal sent by the first transceiver unit and at least one communication signal sent the second transceiver unit for joint further transmission via the transmission line; and demultiplexing a joint received communication signal into at least one communication signal to be received by the first transceiver unit and at least one communication signal to be received by the second transceiver unit; by means of a vector processor; or by means of an analogue hardware multiplexer-demultiplexer arranged between a digital-analogue-converter and a analogue-digital-converter of the access multiplexer and the transmission line of the communication system; or by means of an analogue hardware multiplexer-demultiplexer additionally configured as a digital-analogue-converter and/or analogue-digital-converter.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, *mutandis mutandis,* to embodiments of the computer program product.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:

Figure 1 schematically illustrates order of communication signals in an embodiment of an access multiplexer according to the present invention;

Figure 2 schematically illustrates an embodiment of an access multiplexer according to the present invention, e.g. the embodiment shown in Figure 1 ;

Figure 3A schematically illustrates another embodiment of an access multiplexer according to the present invention;

Figure 3B schematically illustrates another embodiment of an access multiplexer according to the present invention;

Figure 3C schematically illustrates another embodiment of an access multiplexer according to the present invention;

Figure 4A schematically illustrates a flowchart of an embodiment of a method according to the present invention;

Figure 4B schematically illustrates a flowchart of another embodiment of a method according to the present invention;

Figure 5A schematically illustrates a detail of operation for Figures 3A and 3B, wherein the first transceiver unit 100 operates in the sending mode;

Figure 5B schematically illustrates a detail of operation for Figures 3A and 3B, wherein the first transceiver unit 100 operates in the receiving mode;

Figure 6A schematically illustrates a detail of operation for Figure 3C, wherein the first transceiver unit 100 operates in the sending mode; and

Figure 6B schematically illustrates a detail of operation for Figures 3C, wherein the first transceiver unit 100 operates in the receiving mode.

Description of embodiments

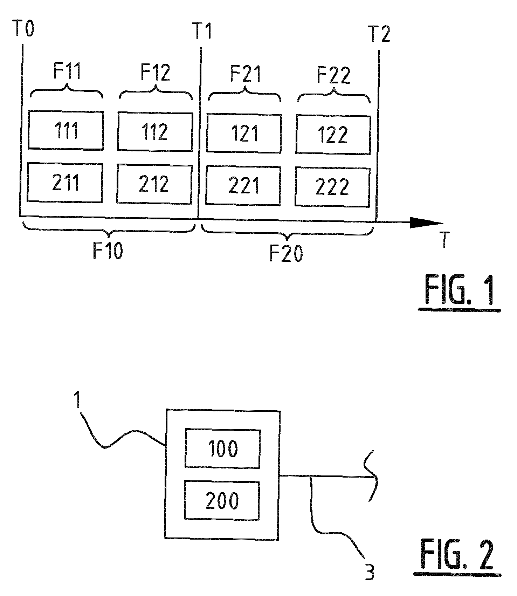

It is an insight of the inventor to synchronize the preferably two transceiver units, such that the downstream, DS, symbols of the first transceiver unit of a first time frame are aligned with the upstream, US, symbols of the second transceiver unit of that time frame. This appears *i.a.* from Figure 1.

Figure 1 schematically illustrates order of communication signals in an embodiment of an access multiplexer according to the present invention. In the present example, the first transceiver unit 100 may for example be configured such that Mds = 17 and Mus =18, and the second transceiver unit 200 may for example be configured such that Mds =18, Mus =17. In this context, Mds may denote a time frame duration of a downstream time frame, expressed in time slots (that is, discrete multitone, DMT, symbol positions), and Mus may denote a time frame duration of an upstream time frame, also expressed in time slots. For example, in G.fast, for a time frame with a duration of 750 $\mu$s, there are 36 time slots, of which 35 time slots are practically usable (hence the above exemplary division in 17 and 18, and 18 and 17, respectively), and of which one time slot is typically used for switching from upstream to downstream and *vice versa*. In this context, "upstream" is to be understood as the direction from the client-side to the server-side, and "downstream" is to be understood as the direction from the server-side to the client-side. In G.fast, the client-side comprises the customer premises equipment, CPE, also called the G.fast transceiver unit - remote, FTU-R, and the server-side comprises the distribution point unit, DPU, also called the G.fast transceiver unit - office, FTU-O.

The figure shows in particular a time axis T, on which a first point in time T0, a second point in time T1, and a third point in time T2 are shown, in order to delineate a first time slice F10 between the first point in time T0 and the second point in time T1, and a second time slice F20 between the second point in time T1 and the third point in time T2. Each time slice may for example have a duration of approximately 750 $\mu$s, and may number 36 time slots, as detailed above. The first time slice F10 is divided (according to the ratio between Mds and Mus) into a first time frame F11 and a second time frame F12, later than the first time frame F11.

The figure further shows a number of data items of communication signals sent and received by the access multiplexer 1. The upper row in the figure shows data items 111, 112, 121, 122 of the first transceiver unit 100. The lower row in the figure shows data items 211, 212, 221, 222 of the second transceiver unit. In other words, the upper row shows traffic for the first transceiver unit 100, whereas the lower row shows traffic for the second transceiver unit 200. The data items may be separated by some time duration, e.g. a guard interval or such.

In this example, given that the access multiplexer 1 forms the server-side, the data items are as follows:

- 111 is a downstream data item sent by the first transceiver unit 100;
- 112 is an upstream data item received by the first transceiver unit 100;
- 121 is a downstream data item sent by the first transceiver unit 100;
- 122 is an upstream data item received by the first transceiver unit 100;
- 211 is an upstream data item received by the second transceiver unit 200;
- 212 is a downstream data item sent by the second transceiver unit 200;
- 221 is an upstream data item received by the second transceiver unit 200; and
- 222 is a downstream data item sent by the second transceiver unit 200.

From the figure, it follows that there is downstream sending taking place for data items 111, 212, 121 and 222. In other words, there is a near-continuous sending of communication signals over the transmission line 3. It also follows that there is upstream receiving taking place for data items 211,112, 221 and 122. In other words, there is also a near-continuous receiving of communication signals over the transmission line 3. Consequently, the access multiplexer 1 can be said to operate in a full-duplex(-like) mode, as both sides may transmit communication signals (near-) continuously, using TDD transceiver units 100, 200.

Figure 2 schematically illustrates an embodiment of an access multiplexer 1 according to the present invention, e.g. the embodiment shown in Figure 1, although the embodiment shown in Figure 1 may differ from this embodiment. The figure shows an access multiplexer 1 comprising a first transceiver unit 100 and a second transceiver unit 200. The first transceiver unit 100 is configured for, when operably connected to a transmission line 3 of the communication system, e.g. a single twisted-pair wireline, operating in a time-division duplexing mode by, during a first time frame, operating in a sending mode and by, during a second time frame after the first time frame, operating in a receiving mode. The second transceiver unit 200 is configured for, when operably connected to the transmission line 3 of the communication system, operating in a time-division duplexing mode by, during the first time frame, operating in a receiving mode and by, during the second time frame, operating in a sending mode. By alternating in their sending *casu quo* receiving modes, the first transceiver unit 100 and the second transceiver unit 200 may be existing (or "legacy"), in particular G.fast, transceiver units, yet may provide full-duplex operation, or full-duplex-like operation (meaning that they provide for two-way traffic for substantially most of the time, even if guard intervals and such occur intermittently). G.fast has been standardized in ITU-T (International Telecommunications Union Telecommunication Standardization Sector) G.9700 and G.9701.

According to an alternative notation, the access multiplexer 1 may also be said to comprises two "ports" 100, 200 per transmission line 3 (that is, per user).

The two transceiver units 100, 200 may be bonded on the physical layer, PHY, or alternatively at a higher layer. In this way, a single data pipe may be formed towards the user. In either case, the two transceiver units 100, 200 are operably connected to a single transmission line 3, e.g. a single twisted-pair, TP, wireline.

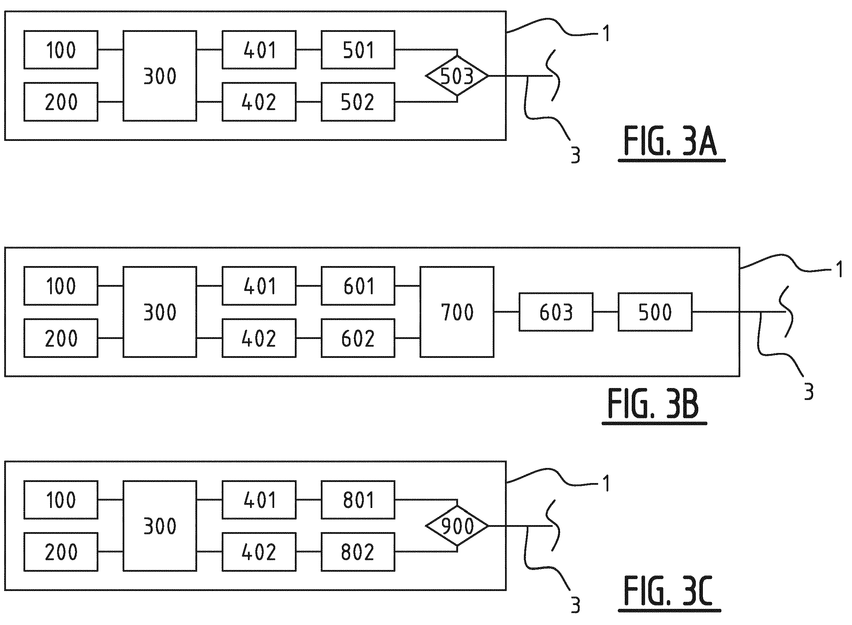

In the present example, the communication signals may be multiplexed-demultiplexed, as there are multiple transceiver units (here: first transceiver unit 100 and second transceiver unit 200) for a transmission line 3 (e.g. a single twisted-pair wireline). The multiplexing of the communication signals from both transceiver units 100, 200 on a single twisted pair 3 may further be optimized based on constraints built into existing PHY chips, in order to improve compatibility with legacy PHY chips. Below, three exemplary embodiments will be described, with reference to Figures 3A to 3C.

In Figures 3A to 3C, generally, the following reference numbers are used:

- 300 denotes a vector processor;
- 401 denotes an inverse fast Fourier transform module; and
- 402 denotes a fast Fourier transform module - it will be understood that these may be combined as a single module sharing computational circuitry, with a switching mode.

Figure 3A schematically illustrates another embodiment of an access multiplexer 1 according to the present invention. According to this first exemplary embodiment, an external multiplexer-demultiplexer (or short: "mux") may be implemented as an additional hybrid 503, in addition to a first DAC/ADC/Hybrid 501 and a second DAC/ADC/Hybrid 502. This first exemplary embodiment poses only limited requirements on the PHY chip. However, the amount of analogue hardware is not reduced. This problem is addressed by the following two exemplary embodiments.

Figure 3B schematically illustrates another embodiment of an access multiplexer 1 according to the present invention. According to this second exemplary embodiment, a mux 700 may be arranged at the interface between the digital frontend (i.e. digital chip I/O 601 and digital chip I/O 602) and the analogue frontend (that is analogue chip I/O 603). A DAC/ADC/Hybrid 500 is also shown, connecting the analogue chip I/O 603 to the transmission line 3. This allows to reduce the amount of analogue hardware, but requires an additional mux 700, and may require a double interface bandwidth into/from the analogue chip, since both downstream and upstream are active simultaneously.

Figure 3C schematically illustrates another embodiment of an access multiplexer 1 according to the present invention. According to this third exemplary embodiment, a mux may be built into the vector processor 300. This allows to reduce the amount of analogue HW, while not adding any additional hybrid (e.g. additional hybrid 503) or interface mux (e.g. mux 700). The figure further shows a DAC 801 and an ADC 802, connected to hybrid 900. According to a preferred embodiment, it is advantageous to allow that the (I)FFT (i.e. modules 401 and 402) can be configured independently from the upper part of the protocol stack (e.g. set the (I)FFT modules 401 and 402 to be always configured for downstream transmission).

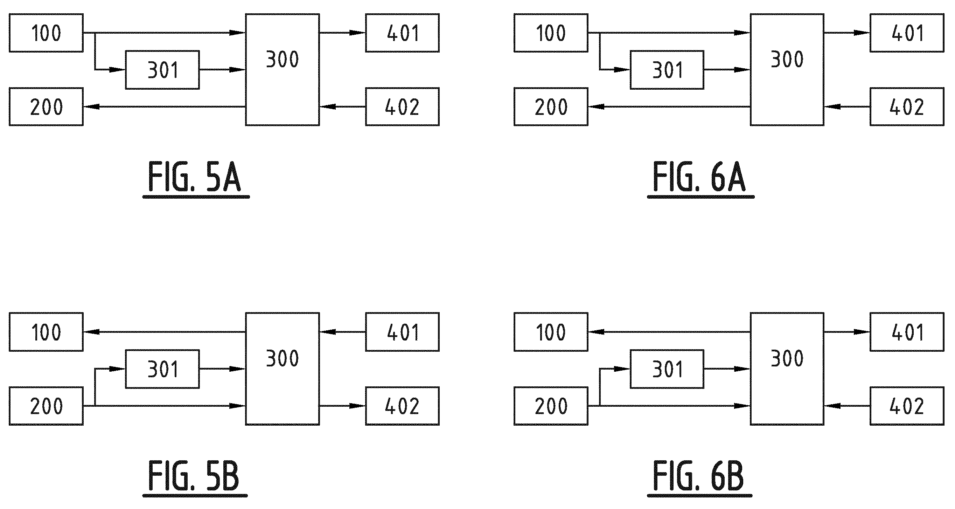

Operation of the three exemplary embodiments illustrated with reference to Figures 3A-3C is further described below, with reference to Figures 5A, 5B, 6A and 6B.

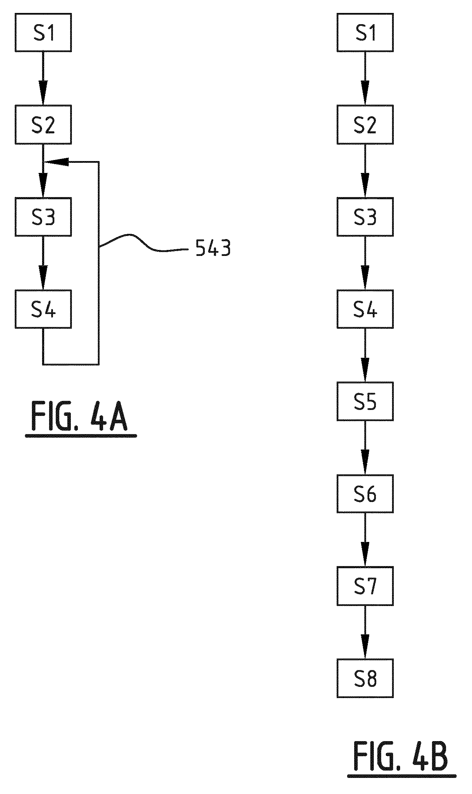

Figure 4A schematically illustrates a flowchart of an embodiment of a method according to the present invention. The figure shows operations S1-S4. In operation S1, a first transceiver unit is operably connected to a transmission line of the communication system, the first transceiver unit being configured for operating in a time-division duplexing mode. In operation S2, a second transceiver unit is operably connected to the transmission line of the communication system, the second transceiver unit being configured for operating in a time-division duplexing mode. In operation S3, during a first time frame, the first transceiver is operated in a sending mode and the second transceiver unit is operated in a receiving mode. In operation S4, during a second time frame after the first time frame, the first transceiver unit is operated in a receiving mode and the second transceiver unit is operated in a sending mode. Preferably, in operation S43, after the second time frame, the method returns to operation S3, analogously to the situation shown in Figure 1.

Figure 4B schematically illustrates a flowchart of another embodiment of a method according to the present invention. Operations S1-S4 correspond to the embodiment shown in Figure 4A, and will therefore not be discussed in further detail. Operations S5-S8 represent additional operations, which are separately optional.

In operation S5, a P-coder matrix is applied. The P-coder matrix comprises at least one echo cancellation coefficient adapted for at least one of cancelling echo from the first transceiver unit during the first time frame and cancelling echo from the second transceiver unit during the second time frame. The P-coder matrix is applied to at least one communication signal of the communication signals.

In operation S6, the transmit signal value of the first transceiver unit at the first delayed time value is stored. In operation S7, the transmit signal value of the second transceiver unit at the second delayed time value is stored.

In operation S8, at least one communication signal sent by the first transceiver unit and at least one communication signal sent the second transceiver unit are multiplexed for joint further transmission via the transmission line; and a joint received communication signal into at least one communication signal to be received by the first transceiver unit and at least one communication signal to be received by the second transceiver unit are demultiplexed. This operation may for example take place by means of a vector processor; or by means of an analogue hardware multiplexer-demultiplexer arranged between a digital-analogue-converter and a analogue-digital-converter of the access multiplexer and the transmission line of the communication system; or by means of an analogue hardware multiplexer-demultiplexer additionally configured as a digital-analogue-converter and/or analogue-digital-converter.

With reference to the Figures 5A, 5B, 6A and 6B, a more detailed discussion of the operation of the three exemplary embodiments of Figures 3A-3C is given. The mathematical exposition below applies to all three exemplary embodiments, unless noted differently. It will be understood by the skilled person that the P-coder matrix can be permuted, if the inputs or outputs are permuted.

Echo cancellation (that is, cancellation or mitigation of a received reflected attenuated and distorted replica of a transmitted communication signal) may be performed in a vector processor 300, VP. Such a VP 300 may also be embedded in a transceiver unit, such as a G.fast chip, although the present figures show them separately for clarity of exposition. For example, when the first transceiver unit 100 operates in a sending mode (that is, transmits or is ready to transmit) in downstream (that is, from the DPU to the CPE) during time frame 111 and/or during time frame 121 of Figure 1, the vector processor 300 may for example use the following P-coder matrix:

$$P = \quad [1\ 0\ 0$$
$$0\ 1\ P_{eBA}]$$

In this P-coder matrix, $P_{eBA}$ may represent a coefficient to cancel echo from A to B. In this context, as well as elsewhere in this specification, "A" may be used to denote the first transceiver unit 100 and "B" may be used to denote the second transceiver unit 200.

The input signal vector into the vector processor 300 may be denoted as follows:

$$[u_A(t1+D)$$

$$y_B(t1-D)$$

$$u_A(t1-D)]$$

In this vector, u(t) and y(t) may denote transmit and receive signal values respectively, on the transmission line 3, at time t (indicating the actual point in time of processing in the vector processor 300, i.e. the time when the P-coder matrix is applied). The subscript letters A and B may denote the first transceiver unit 100 and the second transceiver unit 200, respectively, as explained above. D may represent the processing delay between the VP 300 and the actual transmit symbol position. Typically, D = 2, in order to account for (I)FFT processing (in modules 401 and 402) and the actual transceiving. In a further developed embodiment, a distinction may be made for the processing delay D between $D_T$ for transmission and $D_R$ for reception, since there may be a small but non-negligible difference between these values, due to fast Fourier transform windowing. Moreover, in another further developed embodiment, it may be taken into account that, for boundary changes of time frames, $D_T$ and $D_R$ need not necessarily be correct in absolute time, since they will be correct in relative time: the sequence of data items will remain correct.

It is further noted that $u_A(t1+D)$ and $y_B(t1-D)$ may be received from the transceiver units 100, 200 simultaneously, whereas transmit signal value $u_A(t-D)$ may have been received a couple of symbol positions ago.

To allow for this, the transmit signal value $u_A(t-D)$ may be stored in a memory storage. In a preferred embodiment, it may be stored in the VP 300, as the memory cost to do so is affordable, in comparison to a VP that is typically integrated into a PHY chip, since a typical VP supports eight (8) ports and therefore has storage space for 64 coefficients, leaving plenty of storage space for the present example configuration with only two (2) *casu quo* four (4) ports in use (at most only twelve coefficients needing to be stored). It is further noted that t is a logical symbol counter of a time frame, that runs continuously over multiple time slices F10-F20. A different counter exists for the first time frame F11, F21 and the second time frame F12, F22.

When the first transceiver unit 100 operates in a receiving mode (that is, receives or is ready to receive) in upstream (that is, from the CPE to the DPU) during time frame 112 and/or during time frame 122 of Figure 1, the vector processor 300 may for example use the following P-coder matrix:

$$P = \quad [0\ 1\ 0$$
$$1\ 0\ P_{eAB}]$$

In this P-coder matrix, $P_{eAB}$ may represent a coefficient to cancel echo from B to A.

The input signal vector into the vector processor 300 may be denoted as follows:

$$[y_A(t2-D)$$

$$u_B(t2+D)$$

$$u_B(t2-D)]$$

Moreover, if there is insufficient time available during a guard interval to both post-process a received upstream data item and to pre-process a downstream data item to be sent, according to a further developed embodiment, the received data items may be stored in a buffer until time is available, and/or the data item to be sent may be pre-processed at an earlier time.

Figure 5A schematically illustrates a detail of operation for Figures 3A and 3B, wherein the first transceiver unit 100 operates in the sending mode (and thus the second transceiver unit 200 in the receiving mode). In detail, the figure shows a transmit signal from the first transceiver unit 100, sent from the first transceiver unit 100 towards the vector processor 300; a receive signal, sent from the vector processor 300 to the second transceiver unit 200; and a transmit signal of the first transceiver unit 100 at a delayed time value, which will be detailed below. This last signal may be denoted a "delayed signal".

The delayed signal may be delayed, by buffering it momentarily in a delay buffer 301. The delay buffer 301 may be a part of the vector processor 300, or may be implemented separately. In either case, the delay buffer 301 may be configured for obtaining and buffering a signal value from the first transceiver unit 100 or the second transceiver unit 200. The delay time may be set to $D_T+D_R$, that is, the output of the delay buffer 301 may be either the transmit signal value of the first transceiver unit 100 at a delayed time value $t-D_T-D_R$, or the transmit signal value of the second transceiver unit 200 at a delayed time value $t-D_T-D_R$. This signal may be input into the vector processor 300.

The figure further shows a transmit signal, sent from the vector processor 300 to the inverse fast Fourier transform module 401; and a signal from the second transceiver unit 200, sent from the fast Fourier transform module 402 to the vector processor 300.

Figure 5B schematically illustrates a detail of operation for Figures 3A and 3B, wherein the first transceiver unit 100 operates in the receiving mode (and thus the second transceiver unit 200 in the sending mode). In detail the figure shows a receive signal, sent from the vector processor 300 to the first transceiver unit 100; a signal from the second transceiver unit 200, sent from the second transceiver unit 200 to the vector processor 300; and a transmit signal of the second transceiver unit 200 at a delayed time value, analogously to the delayed signal detailed above with reference to Figure 5A. However, from the different directions of the signal arrows, it is clear that the sending and receiving are switched in Figure 5B with respect to Figure 5A.

The figure further shows a signal from the first transceiver unit 100, sent from the inverse fast Fourier transform module 401 to the vector processor 300; and a transmit signal, sent from the vector processor 300 to the fast Fourier transform module 402.

It will be understood that in the first exemplary embodiment of Figure 3A and the second exemplary embodiment of Figure 3B, corresponding to Figures 5A and 5B, the vector processor 300 communicates with both transceiver units 100 and 200 (and the modules 401 and 402). That is, on a data link between the transceiver units 100, 200 and the vector processor 300, data may always come in the same order. Given a P-coder matrix of [100 ; 01 $Pe_{BA}$] for Figure 5A, the output may be ordered such that the first signal is the transmit signal and the second signal is the receive signal. For Figure 5B, the P-coder matrix may be [010 ; 10$Pe_{AB}$].

It is noted that in Figures 5A and 5B, the blocks 401 and 402 represent, with reference to Figures 3A and 3B, the (inverse) fast Fourier transform modules. In Figures 6A and 6B, the blocks 401 and 402 respectively represent a combination of the inverse fast Fourier transform module with a digital-analogue-converter on the one hand, and a combination of the fast Fourier transform module with an analogue-digital-converter on the other hand.

Figure 6A schematically illustrates a detail of operation for Figure 3C, wherein the first transceiver unit 100 operates in the sending mode (and thus the second transceiver unit 200 in the receiving mode). In detail, the figure shows a signal from the first transceiver unit 100, sent from the first transceiver unit 100 to the vector processor 300; a signal to the second transceiver unit 200, sent from the vector processor 300 to the second transceiver unit 200; and a transmit signal of the first transceiver unit 100 at a delayed time value, analogously to the delayed signal detailed above with reference to Figure 5A.

The figure further shows a signal to the digital-analogue-converter 401, sent from the vector processor 300 to block 401; and a signal from the analogue-digital-converter 402, sent from block 402 to the vector processor 300.

Figure 6B schematically illustrates a detail of operation for Figures 3C, wherein the first transceiver unit 100 operates in the receiving mode (and thus the second transceiver unit 200 in the sending mode). In detail, the figure shows a signal to the first transceiver unit 100, sent from the vector processor 300 to the first transceiver unit 100; a signal from the second transceiver unit 200, sent from the second transceiver unit 200 to the vector processor 300; and a transmit signal of the second transceiver unit 200 at a delayed time value, analogously to the delayed signal detailed above with reference to Figure 5A.

It will be understood that in the third exemplary embodiment of Figure 3C, corresponding to Figures 6A and 6B, only the first and second transceiver units 100, 200 switch from downstream to upstream transmission, in contrast to the situation above for Figures 5A and 5B. In other words, block 401 may always be receiving from the vector processor 300, and block 402 may always be transmitting to the vector processor 300. This may be reflected in the matrix representation by having the signals from the analogue-digital-converter 402 in a fixed position in the input to the vector processor 300. In this case, the P-coder matrix for Figure 6A may be [100 ; 0 1 $P_{EBA}$], and the P-coder matrix for Figure 6B may be [100 ; 0 1 Pe$_{AB}$].

Embodiments of the present invention as described above may be advantageously applied in a context of G.fast communication systems (operating over transmission lines such as digital subscriber lines, or other transmission lines, such as coaxial cables), where standards currently require the use of TDD transceiver units with support for symmetry ratios between 90/10 and 50/50, and optionally allowing 50/50 to 10/90.

According to various embodiments, crosstalk may be ignored with limited negative impact, for example because a multi-dwelling unit containing part of the communication system may feature individual shielded wirelines such as coaxial cables, and/or because multiple wirelines may physically converge near to each other only over a limited range, close to an access multiplexer.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

**Claims**

1. An access multiplexer for transmitting and receiving communication signals in a communication system, the access multiplexer comprising:

   - a first transceiver unit configured for, when operably connected to a transmission line of the communication system, operating in a time-division duplexing mode by, during a first time frame, operating in a sending mode and by, during a second time frame after the first time frame, operating in a receiving mode; and
   - a second transceiver unit configured for, when operably connected to the transmission line of the communication system, operating in a time-division duplexing mode by, during the first time frame, operating in a receiving mode and by, during the second time frame, operating in a sending mode.

2. The access multiplexer of claim 1, comprising a vector processor configured for applying a P-coder matrix comprising at least one echo cancellation coefficient adapted for at least one of cancelling echo from the first transceiver unit during the first time frame and cancelling echo from the second transceiver unit during the second time frame, the P-coder matrix being applied to at least one communication signal of the communication signals.

3. The access multiplexer of claim 2, wherein the vector processor is configured for applying the P-coder matrix to a first vector comprising:

   - a transmit signal value of the first transceiver unit at a first advanced time value of the first time frame;
   - a receive signal value of the second transceiver unit at a first delayed time value of the first time frame; and
   - a transmit signal value of the first transceiver unit at the first delayed time value of the first time frame.

4. The access multiplexer of claim 2 or 3, wherein the vector processor is configured for applying the P-coder matrix to a second vector comprising:

   - a receive signal value of the first transceiver unit at a second delayed time value of the second time frame;
   - a transmit signal value of the second transceiver unit at a second advanced time value of the second time frame; and
   - a transmit signal value of the second transceiver unit at the second delayed time value of the second time frame.

5. The access multiplexer of claim 3 or 4, comprising a memory storage, configured for storing the transmit signal value of the first transceiver unit at the first delayed time value and/or the transmit signal value of the second transceiver unit at the second delayed time value.

6. The access multiplexer of any one of the claims 3-5, wherein the time values are advanced or delayed respectively by 2 discrete multi-tone symbol positions, preferably from an original time value indicating the time when the P-coder matrix is applied.

7. The access multiplexer of any one of the previous claims,
wherein the vector processor is configured for multiplexing at least one communication signal sent by the first transceiver unit and at least one communication signal sent the second transceiver unit for joint further transmission via the transmission line; and for demultiplexing a joint received communication signal into at least one communication signal to be received by the first transceiver unit and at least one communication signal to be received by the second transceiver unit; or wherein the access multiplexer comprises an analogue hardware multiplexer-demultiplexer arranged between a digital-analogue-converter and a analogue-digital-converter of the access multiplexer and the transmission line of the communication system; or
wherein the access multiplexer comprises an analogue hardware multiplexer-demultiplexer additionally configured as a digital-analogue-converter and/or analogue-digital-converter.

8. A method for transmitting and receiving communication signals in a communication system, the method comprising:

   - operably connecting a first transceiver unit to a transmission line of the communication system, the first transceiver unit being configured for operating in a time-division duplexing mode;
   - operably connecting a second transceiver unit to the transmission line of the communication system, the second transceiver unit being configured for operating in a time-division duplexing mode;
   - during a first time frame, operating the first transceiver in a sending mode and operating the second transceiver unit in a receiving mode; and
   - during a second time frame after the first time frame, operating the first transceiver unit in a receiving mode and operating the second transceiver unit in a sending mode.

9. The method of claim 8, comprising applying a P-coder matrix comprising at least one echo cancellation coefficient adapted for at least one of cancelling echo from the first transceiver unit during the first time frame and cancelling echo from the second transceiver unit during the second time frame, the P-coder matrix being applied to at least one communication signal of the communication signals.

10. The method of claim 9, wherein the applying comprises applying the P-coder matrix to a first vector comprising:

   - a transmit signal value of the first transceiver unit at a first advanced time value of the first time frame;

- a receive signal value of the second transceiver unit at a first delayed time value of the first time frame; and
- a transmit signal value of the first transceiver unit at the first delayed time value of the first time frame.

11. The method of claim 9 or 10, wherein the applying comprises applying the P-coder matrix to a second vector comprising:

- a receive signal value of the first transceiver unit at a second delayed time value of the second time frame;
- a transmit signal value of the second transceiver unit at a second advanced time value of the second time frame; and
- a transmit signal value of the second transceiver unit at the second delayed time value of the second time frame.

12. The method of any one of the claims 10-11, comprising storing the transmit signal value of the first transceiver unit at the first delayed time value and/or the transmit signal value of the second transceiver unit at the second delayed time value.

13. The method of any one of the claims 10-12, wherein the time values are advanced or delayed respectively by 2 discrete multi-tone symbol positions, preferably from an original time value indicating the time when the P-coder matrix is applied.

14. The method of any one of the claims 8-13, comprising multiplexing at least one communication signal sent by the first transceiver unit and at least one communication signal sent the second transceiver unit for joint further transmission via the transmission line; and demultiplexing a joint received communication signal into at least one communication signal to be received by the first transceiver unit and at least one communication signal to be received by the second transceiver unit; by means of a vector processor; or by means of an analogue hardware multiplexer-demultiplexer arranged between a digital-analogue-converter and a analogue-digital-converter of the access multiplexer and the transmission line of the communication system; or by means of an analogue hardware multiplexer-demultiplexer additionally configured as a digital-analogue-converter and/or analogue-digital-converter.

15. A computer program product comprising a computer-executable program of instructions for performing, when executed on a computer, the steps of the method of any one of the claims 8-14.

T0        T1        T2

F11    F12    F21    F22

| 111 | 112 | 121 | 122 |
| 211 | 212 | 221 | 222 |

T

F10        F20

## FIG. 1

1

| 100 |
| 200 |

3

## FIG. 2

FIG. 3A

FIG. 3B

FIG. 3C

FIG. 4A

FIG. 4B

**FIG. 5A**

**FIG. 6A**

**FIG. 5B**

**FIG. 6B**

EP 3 291 477 A1

Europäisches
Patentamt

European
Patent Office

Office européen
des brevets

## EUROPEAN SEARCH REPORT

Application Number

EP 16 30 6099

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/294597 A1 (SHI CAO [CN] ET AL) 7 November 2013 (2013-11-07) | 1,7,8, 14,15 | INV. H04L5/16 |
| Y | * paragraph [0039] - paragraph [0042]; figures 2,4-6,7A,7B,7C,8A,8B,8C,9,12-15 * * paragraph [0046] - paragraph [0060] * * paragraph [0067] - paragraph [0071] * ----- | 2-6,9-13 | ADD. H04L5/14 |
| Y | BROADCOM: "G.fast: Performance of full-duplex system with 106MHz bandwidth over coax.;2016-04-Q4-022", ITU-T DRAFT ; STUDY PERIOD 2013-2016, INTERNATIONAL TELECOMMUNICATION UNION, GENEVA ; CH , vol. 4/15 10 May 2016 (2016-05-10), pages 1-7, XP044174694, Retrieved from the Internet: URL:https://www.itu.int/ifa/ties/Mtgs16/Q4 /2016-04-Q4-022.docx [retrieved on 2016-05-10] * Abstract, Section 1, Section 3 * ----- | 2-6,9-13 | |

TECHNICAL FIELDS SEARCHED (IPC)

H04L

The present search report has been drawn up for all claims

| Place of search | Date of completion of the search | Examiner |
|---|---|---|
| The Hague | 8 February 2017 | Skraparlis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 6099

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2017

| Patent document cited in search report | Publication date | Patent family member(s) | Publication date |
|---|---|---|---|
| US 2013294597 A1 | 07-11-2013 | CN 104350685 A | 11-02-2015 |
| | | EP 2845325 A1 | 11-03-2015 |
| | | US 2013294597 A1 | 07-11-2013 |
| | | US 2016191230 A1 | 30-06-2016 |
| | | WO 2013166245 A1 | 07-11-2013 |

EPO FORM P0459

For more details about this annex : see Official Journal of the European Patent Office, No. 12/82